# FASCICULE DE BREVET EUROPEEN

(11) **EP 4 208 627 B1**
(45) Date de publication et mention de la délivrance du brevet: **05.03.2025**
(21) Numéro de dépôt: 21770058.2
(22) Date de dépôt: 26.08.2021
(51) Int. Cl.: F01D 11/00, C04B 37/00, C04B 35/80

(54) **PIECE DE TURBOMACHINE AVEC BORD DE LIAISON EN MATERIAU COMPOSITE A MATRICE CERAMIQUE ET A FIBRES COURTES ET SON PROCEDE DE FABRICATION**
TURBOMASCHINENTEIL MIT VERBINDUNGSKANTE AUS VERBUNDWERKSTOFF MIT KERAMISCHER MATRIX UND KURZFASERN UND VERFAHREN ZU DESSEN HERSTELLUNG
TURBOMACHINE PART WITH CONNECTING EDGE MADE OF COMPOSITE MATERIAL WITH CERAMIC MATRIX AND SHORT FIBRES AND METHOD FOR THE MANUFACTURE OF SAME

(30) Priorité: 03.09.2020 FR 2008953
(43) Date de publication de la demande: 12.07.2023
(73) Titulaire: SAFRAN AIRCRAFT ENGINES, 75015 Paris (FR); Safran Ceramics, 33185 Le Haillan (FR)
(72) Inventeur: QUENNEHEN, Lucien, Henri, Jacques, 77550 MOISSY-CRAMAYEL (FR); CONGRATEL, Sébastien, Serge, Francis, 77550 MOISSY-CRAMAYEL (FR); GIMAT, Matthieu, Arnaud, 77550 MOISSY-CRAMAYEL (FR)
(74) Mandataire: Cabinet Beau de Loménie
(86) Numéro de dépôt international: PCT/FR2021/051490
(87) Numéro de publication internationale: WO 2022/049339

(56) Documents cités:
- EP-A1- 3 269 936
- WO-A1-2019/122760
- WO-A2-2017/103411
- FR-A1- 2 942 845
- US-A1- 2017 370 239

## Description

### Domaine Technique

La présente invention concerne des pièces de turbomachine ou turbine à gaz entre lesquelles une étanchéité doit être réalisée au moyen d'au moins une languette d'étanchéité logée dans des rainures présentes sur les bords de liaison des pièces adjacentes.

Les documents EP 3 269 936, US 2017/370239, FR 2 942 845 et WO 2017/103411 décrivent des pièces de turbomachine d'un ensemble annulaire.

L'invention concerne par exemple, mais non exclusivement, un ensemble d'anneau de turbine pour une turbomachine, lequel ensemble comprend une pluralité de secteurs d'anneau en matériau composite à matrice céramique ou en matériau métallique et une structure de support d'anneau. L'étanchéité entre les secteurs d'anneau adjacents est réalisée par une ou plusieurs languettes d'étanchéité logées dans des rainures usinées dans les bords de liaison des secteurs.

Les secteurs d'anneau peuvent être réalisés en matériau métallique. Les zones d'étanchéité réalisées par les languettes entre les secteurs d'anneau sont le siège de points chauds en raison des températures élevées rencontrées par l'anneau en fonctionnement. Il est donc nécessaire dans ce cas de prévoir une ventilation de refroidissement dédiée qui est relativement pénalisante vis-à-vis des performances de la turbomachine.

Les matériaux composites à matrice céramique, ou CMC, sont connus pour leurs bonnes propriétés mécaniques qui les rendent aptes à constituer des éléments de structure, et pour leur capacité à conserver ces propriétés à des températures élevées. L'utilisation de CMC pour différentes parties chaudes de moteurs aéronautiques a déjà été envisagée, d'autant que les CMC ont une masse volumique inférieure à celle de métaux réfractaires traditionnellement utilisés.

La réalisation d'un ensemble d'anneau de turbine à partir de secteurs d'anneau en CMC est notamment décrite dans le document WO 2017/060604, les secteurs étant réalisés à partir d'un renfort fibreux obtenue par tissage tridimensionnel (3D) densifié par une matrice céramique. Comme pour les secteurs d'anneau en matériau métallique, l'étanchéité entre les secteurs d'anneau adjacents est réalisée par une ou plusieurs languettes d'étanchéité logées dans des rainures usinées dans les bords de liaison des secteurs.

Si l'utilisation de secteurs d'anneau en CMC permet de réduire significativement la ventilation nécessaire au refroidissement de l'anneau de turbine, voire de la supprimer, l'usinage d'un matériau CMC comprenant un renfort fibreux tissé 3D est difficile. Il est encore plus difficile lorsque cet usinage doit être réalisé pour des dimensions relativement importantes avec un grand degré de précision comme pour les rainures évoquées ci-avant qui sont à la fois relativement profondes et fines.

Ces inconvénients sont également présents dans d'autres ensembles de turbine sectorisés dans lesquels l'étanchéité inter-pièces est réalisée avec des languettes d'étanchéité logées dans des rainures.

Il existe donc un besoin pour réaliser facilement une étanchéité entre des pièces d'un ensemble sectorisé sans avoir à refroidir la zone d'étanchéité.

### Exposé de l'invention

A cet effet, l'invention propose une pièce de turbomachine selon la revendication 1. Par « structural », on entend ici la capacité du corps à supporter des chargements mécaniques et/ou à transmettre ces efforts.

En dotant la pièce de turbomachine avec un ou plusieurs bords de liaison en matériau composite à matrice céramique, matériau apte à supporter des températures élevées, on réduit considérablement, voire on supprime, les besoins en ventilation de refroidissement de la ou les zones d'étanchéité entre les pièces. En outre, le ou les bords de liaison étant en matériau composite à matrice céramique et à renfort en fibres courtes, le matériau est plus facilement usinable et la réalisation de rainures fines et profondes est plus facile. On assure ainsi une plus grande maîtrise dimensionnelle et, par conséquent, une plus grande fiabilité de l'étanchéité.

Selon un aspect particulier de la pièce de turbomachine de l'invention, le corps structural est en matériau composite comprenant un renfort fibreux constitué d'une pluralité de couches de fils liées entre elles par tissage tridimensionnel ou multicouche, ledit renfort étant densifié par une matrice céramique. Dans ce cas, la pièce bénéficie des avantages du matériau CMC (bonne tenue en température pour une masse globale réduite) dans son intégralité tout en facilitant la réalisation de rainures pour les languettes d'étanchéité et la maîtrise dimensionnelle desdites rainures.

Selon un autre aspect particulier de la pièce de turbomachine de l'invention, le corps structural est en matériau métallique. On obtient ainsi, une pièce présentant une bonne tenue mécanique en raison du corps structural en métal tout en s'affranchissant du besoin de refroidissement dans ses zones d'étanchéité grâce à la réalisation de bords de liaison en matériau composite à matrice céramique et à fibres courtes.

Selon une caractéristique particulière de la pièce de turbomachine de l'invention, la pièce est un secteur d'anneau de turbine s'étendant de manière annulaire autour d'un axe, le secteur comprenant un corps structural de secteur comportant une base annulaire ayant une face interne destinée à définir la face interne d'un anneau de turbine lorsque le secteur d'anneau est monté à une structure de support d'anneau et une face externe à partir de laquelle s'étend une ou plusieurs portions d'accrochage du secteur d'anneau à la structure de support d'anneau, le secteur d'anneau comprenant en outre deux bords de liaison inter-secteurs présents aux extrémités circonférentielles du corps structural de secteur, chaque bord de liaison inter-secteurs étant destiné à être en regard d'un secteur d'anneau circonférentiellement voisin lorsque le secteur d'anneau est monté sur la structure de support d'anneau, chaque bord de liaison inter-secteurs comportant une ou plusieurs rainures destinées à recevoir une languette d'étanchéité.

Selon une autre caractéristique particulière de la pièce de turbomachine de l'invention, la pièce est un secteur de distributeur s'étendant de manière annulaire autour d'un axe, le secteur comprenant un corps structural de secteur comportant un profil aérodynamique s'étendant suivant une direction radiale entre une plateforme interne et une plateforme externe et, suivant une direction axiale, entre un bord d'attaque et un bord de fuite, ledit secteur comprenant en outre deux bords de liaison inter-plateformes présents aux extrémités circonférentielles de chaque plateforme, chaque bord de liaison inter-plateforme étant destinée à être en regard d'une plateforme d'un secteur voisin, chaque bord de liaison inter-plateformes comportant une ou plusieurs rainures destinées à recevoir une languette d'étanchéité.

Selon une autre caractéristique particulière de la pièce de turbomachine de l'invention, la pièce est une aube mobile de turbine s'étendant de manière annulaire autour d'un axe, l'aube comprenant un corps structural d'aube s'étendant suivant une direction radiale entre une portion de pied ou portion interne et un sommet d'aube ou une portion externe et, suivant une direction axiale, entre un bord d'attaque et un bord de fuite, ledit corps comprenant en outre au moins une plateforme, l'aube de turbine comprenant en outre deux bords de liaison inter-plateformes présents aux extrémités circonférentielles de chaque plateforme, chaque bord de liaison inter-plateforme étant destinée à être en regard d'une plateforme d'une aube voisine, chaque bord de liaison inter-plateformes comportant une ou plusieurs rainures destinées à recevoir une languette d'étanchéité. L'invention a également pour objet un procédé de fabrication d'une pièce de turbomachine selon la caracteristique 7.

Le ou les bords de liaison étant réalisé en matériau composite à matrice céramique et à renfort en fibres courtes, des rainures fines et profondes peuvent être facilement obtenues sans difficulté d'usinage et avec une plus grande maîtrise dimensionnelle.

En dotant la pièce de turbomachine avec un ou plusieurs bords de liaison en matériau composite à matrice céramique, matériau apte à supporter des températures élevées, on réduit considérablement, voire on supprime, les besoins en ventilation de refroidissement de la ou les zones d'étanchéité entre les pièces.

Selon un aspect particulier du procédé de l'invention, la réalisation du corps structural comprend le tissage tridimensionnel ou multicouche d'un renfort fibreux et la densification du renfort fibreux par une matrice céramique. Dans ce cas, la pièce bénéficie des avantages du matériau CMC (bonne tenue en température pour une masse globale réduite) dans son intégralité tout en facilitant la réalisation de rainures pour les languettes d'étanchéité et la maîtrise dimensionnelle desdites rainures. Dans ce cas, la fixation de chaque bord de liaison au corps structural est réalisée par brasage, par liaison mécanique ou par cosiliciuration.

Selon un autre aspect particulier du procédé de l'invention, le corps structural est réalisé en matériau métallique. On obtient ainsi, une pièce présentant une bonne tenue mécanique en raison du corps structural en métal tout en s'affranchissant du besoin de refroidissement dans ses zones d'étanchéité grâce à la réalisation de bords de liaison en matériau composite à matrice céramique et à fibres courtes. Dans ce cas, la fixation de chaque bord de liaison au corps structural est réalisée par brasage ou par liaison mécanique

### Brève description des dessins

[Fig. 1A] La figure 1A est une vue schématique en perspective éclatée de deux pièces de turbomachine correspondant à des pièces d'une veine sectorisée conformément à un mode de réalisation de l'invention,
[Fig. 1B] La figure 1B est une vue schématique en perspective des deux pièces de la figure 1A une fois assemblée,
[Fig. 2A] La figure 2A est une vue schématique en perspective éclatée d'un secteur d'anneau de turbine conformément à un mode de réalisation de l'invention,
[Fig. 2B] La figure 2B est une vue schématique en perspective du secteur d'anneau de la figure 2A une fois assemblé,
[Fig. 3A] La figure 3A est une vue schématique en perspective éclatée d'un secteur d'anneau de turbine conformément à un mode de réalisation de l'invention,
[Fig. 3B] La figure 3B est une vue schématique en perspective du secteur d'anneau de la figure 3A une fois assemblé,
[Fig. 4] La figure 4 est une vue schématique en perspective d'un secteur de stator conformément à un mode de réalisation de l'invention,
[Fig. 5] La figure 5 est une vue schématique en perspective d'une aube de roue mobile conformément à un mode de réalisation de l'invention,.

### Description des modes de réalisation

L'invention s'applique d'une manière générale à toute pièce de turbomachine ou turbine à gaz destinée à réaliser une étanchéité avec une pièce adjacente au moyen d'au moins une languette d'étanchéité logée dans des rainures présentes sur le ou les bords de liaison des pièces adjacentes. La pièce de l'invention correspond à une pièce utilisée pour former des ensembles annulaires de turbomachine tels que des anneaux de turbine, des distributeurs, des roues mobiles de turbines, etc.

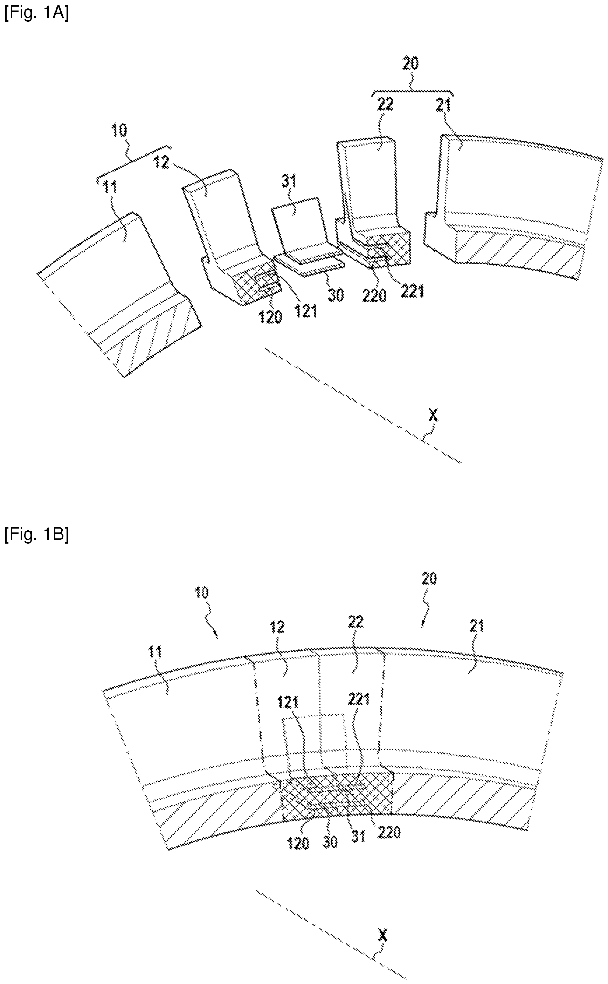

Les figures 1A et 1B illustrent deux pièces de turbomachine 10 et 20 correspondant à des pièces d'une veine sectorisée s'étendant de manière annulaire autour d'un axe X. Sur les figures 1A et 1B, les pièces 10 et 20 comprennent chacune un corps structural 11, 21 en matériau métallique ou en matériau composite à matrice céramique (CMC) et un bord de liaison 12, 22. Sur les figures 1A et 1B, seuls les bords de liaison 12 et 22 des pièces 10 et 20 sont représentés par souci de simplification. Les pièces 10 et 20 comprennent chacune un autre bord de liaison à leurs extrémités axialement opposées afin de réaliser une étanchéité avec les pièces de turbomachine axialement adjacentes (non représentées sur les figures 1A et 1B).

Conformément à l'invention, les bords de liaison 12 et 22 sont réalisés en matériau composite comprenant un renfort fibreux constitué de fibres courtes orientées de manière aléatoire, le renfort étant densifié par une matrice céramique. Le bord de liaison 12 comporte une première rainure 120 recevant une partie d'une première languette d'étanchéité 30 et une deuxième rainure 121 recevant une partie d'une deuxième languette d'étanchéité 31. Le bord de liaison 22 comporte une première rainure 220 recevant l'autre partie de la première languette d'étanchéité 30 et une deuxième rainure 221 recevant l'autre partie de la deuxième languette d'étanchéité 31.

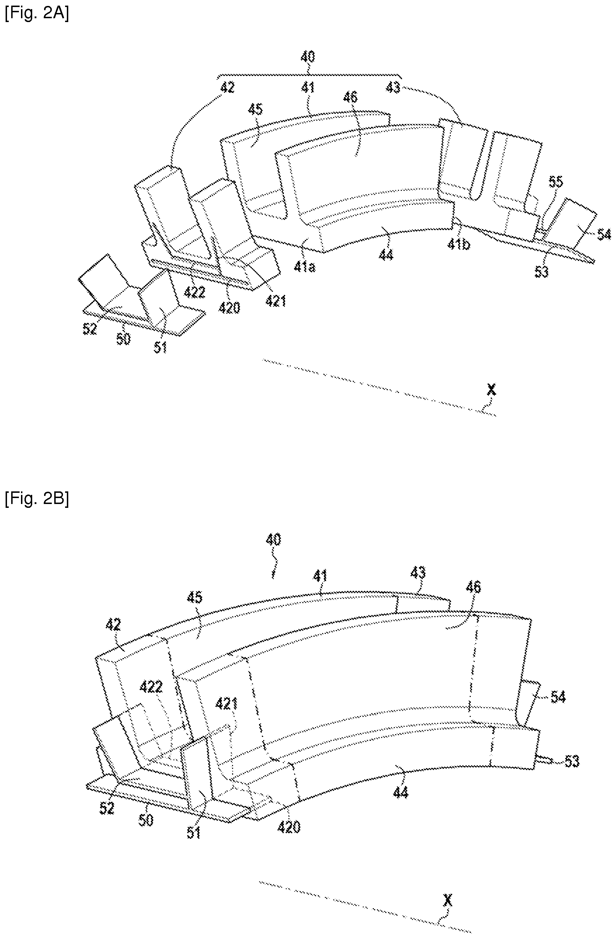

Les figures 2A et 2B illustrent une pièce de turbomachine correspondant à un secteur d'anneau de turbine 40 s'étendant de manière annulaire autour d'un axe X. Le secteur d'anneau 40 a une section sensiblement en forme de π inversé avec une base annulaire 44 dont la face interne définit la veine d'écoulement de flux gazeux dans une turbine (figure 2B). Des pattes amont et aval 45, 46 s'étendent à partir de la face externe de la base annulaire 12 et sont destinées à être fixées à des brides annulaires d'une structure de support d'anneau non représentées sur les figures 2A et 2B. Le secteur d'anneau 40 est un secteur d'une pluralité de secteurs d'anneau constituant ensemble un anneau de turbine, une étanchéité étant réalisée entre tous les secteurs d'anneau circonférentiellement adjacents de l'anneau.

Le secteur d'anneau de turbine 40 comprend un corps structural 41 en matériau composite à matrice céramique (CMC) et deux bords de liaison inter-secteurs 42 et 43 présents respectivement aux extrémités circonférentielles 41a et 41b du corps structural 41.

Conformément à l'invention, les bords de liaison inter-secteurs 42 et 43 sont réalisés en matériau composite comprenant un renfort fibreux constitué de fibres courtes orientées de manière aléatoire, le renfort étant densifié par une matrice céramique. Le bord de liaison 42 comporte une première rainure 420 recevant une partie d'une première languette d'étanchéité 50, une deuxième rainure 421 recevant une partie d'une deuxième languette d'étanchéité 51 et une troisième rainure 422 recevant une partie d'une troisième languette d'étanchéité 52. Le bord de liaison 43 comporte également trois rainures, non représentées sur les figures 2A et 2B, similaires aux rainures 420, 421 et 422 du bord de liaison inter-secteurs 42 recevant respectivement une partie d'une quatrième languette d'étanchéité 53, une partie d'une cinquième languette d'étanchéité 54 et une partie d'une sixième languette d'étanchéité 55.

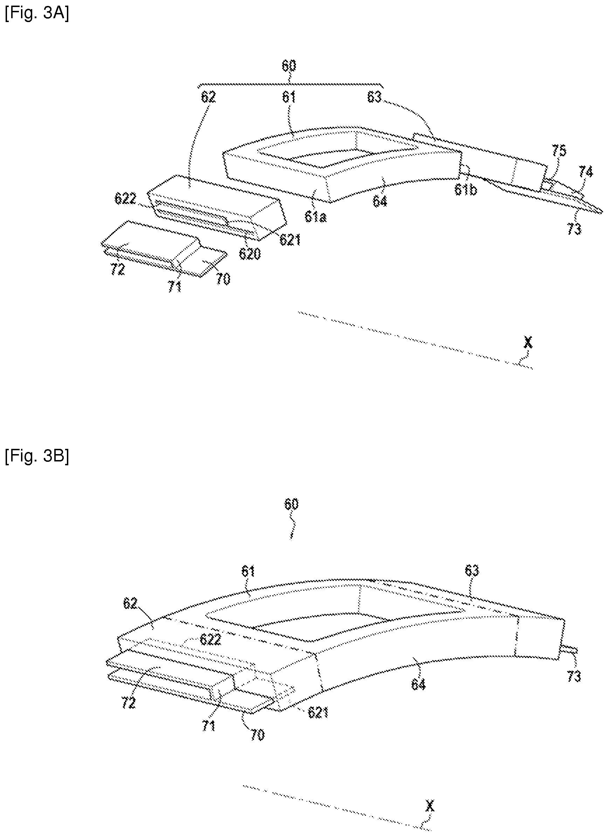

Les figures 3A et 3B illustrent une pièce de turbomachine correspondant à un secteur d'anneau de turbine 60 s'étendant de manière annulaire autour d'un axe X. Le secteur d'anneau 60 comporte une base annulaire 64 dont la face interne définit la veine d'écoulement de flux gazeux dans une turbine (figure 3B). Le secteur d'anneau 60 est un secteur d'une pluralité de secteurs d'anneau constituant ensemble un anneau de turbine, une étanchéité étant réalisée entre tous les secteurs d'anneau circonférentiellement adjacents de l'anneau.

Le secteur d'anneau de turbine 60 comprend un corps structural de secteur 61 en matériau métallique et deux bords de liaison inter-secteurs 62 et 63 présents respectivement aux extrémités circonférentielles 61a et 61b du corps structural 61.

Conformément à l'invention, les bords de liaison inter-secteurs 62 et 63 sont réalisés en matériau composite comprenant un renfort fibreux constitué de fibres courtes orientées de manière aléatoire, le renfort étant densifié par une matrice céramique. Le bord de liaison 62 comporte une première rainure 620 recevant une partie d'une première languette d'étanchéité 70, une deuxième rainure 621 recevant une partie d'une deuxième languette d'étanchéité 71 et une troisième rainure 622 recevant une partie d'une troisième languette d'étanchéité 72. Le bord de liaison 63 comporte également trois rainures, non représentées sur les figures 3A et 3B, similaires aux rainures 620, 621 et 622 du bord de liaison inter-secteurs 62 recevant respectivement une partie d'une quatrième languette d'étanchéité 73, une partie d'une cinquième languette d'étanchéité 74 et une partie d'une sixième languette d'étanchéité 75.

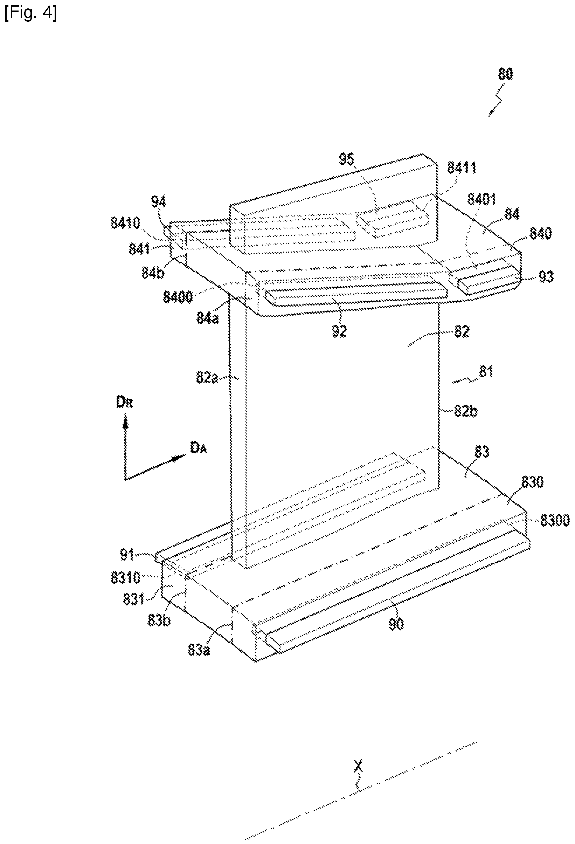

La figure 4 illustre une pièce de turbomachine correspondant à un secteur de distributeur de turbine 80 s'étendant de manière annulaire autour d'un axe X. Le secteur de distributeur 80 comporte un corps structural de secteur 81 en matériau CMC comprenant un profil aérodynamique 82 s'étendant suivant une direction radiale D_{R} entre une plateforme interne 83 et une plateforme externe 84 et, suivant une direction axiale D_{A}, entre un bord d'attaque 82a et un bord de fuite 82b. Le secteur de distributeur 80 est un secteur d'une pluralité de secteurs de distributeur constituant ensemble un distributeur de turbine, une étanchéité étant réalisée entre tous les secteurs de distributeur circonférentiellement adjacents du distributeur.

Le secteur d'anneau de turbine 80 comprend en outre au niveau de la plateforme interne 83 deux bords de liaison inter-plateformes 830 et 831 présents respectivement aux extrémités circonférentielles 83a et 83b de la plateforme interne 83. De même, le secteur d'anneau de turbine 80 comprend au niveau de la plateforme externe 84 deux bords de liaison inter-plateformes 840 et 841 présents respectivement aux extrémités circonférentielles 84a et 84b de la plateforme externe 84.

Conformément à l'invention, les bords de liaison inter-plateformes 830, 831, 840 et 841 sont réalisés en matériau composite comprenant un renfort fibreux constitué de fibres courtes orientées de manière aléatoire, le renfort étant densifié par une matrice céramique. Les bords de liaison 830 et 831 comportent respectivement une rainure 8300 et une rainure 8310, la rainure 8300 recevant une partie d'une première languette d'étanchéité 90 tandis que la rainure 8310 reçoit une partie d'une deuxième languette d'étanchéité 91. Le bord de liaison 840 comporte deux rainures 8400 et 8401 recevant respectivement une partie de troisième et quatrième languettes d'étanchéité 92 et 93. Le bord de liaison 841 comporte également deux rainures 8410 et 8411 recevant respectivement une partie d'une quatrième languette d'étanchéité 94 et une partie d'une cinquième languette d'étanchéité 95.

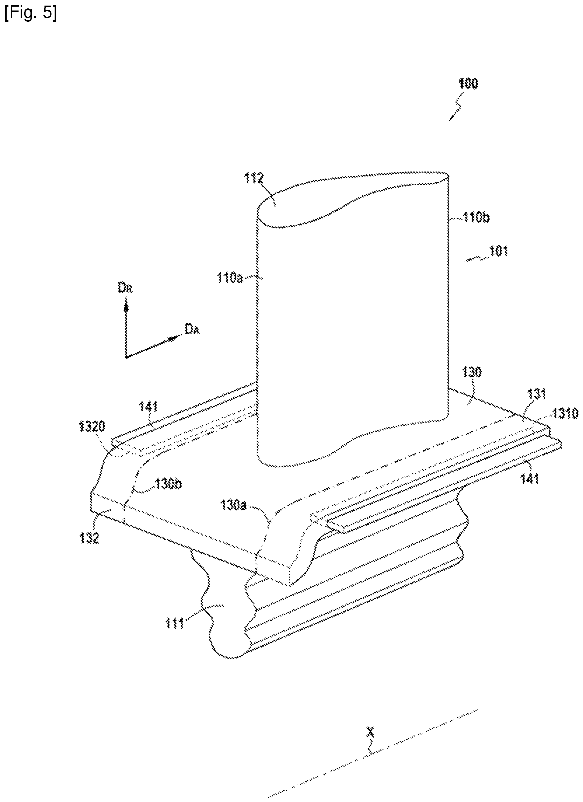

La figure 5 illustre une pièce de turbomachine correspondant à une aube mobile de turbine 100 s'étendant de manière annulaire autour d'un axe X. L'aube mobile 100 comporte un corps structural d'aube 110 en matériau CMC s'étendant suivant une direction radiale D_{R} entre une portion de pied ou portion interne 111 et un sommet d'aube ou une portion externe 112 et, suivant une direction axiale D_{A}, entre un bord d'attaque 110a et un bord de fuite 110b. Dans l'exemple décrit ici, l'aube mobile 100 comprend en outre une plateforme interne 130. L'aube mobile 100 est destinée à être fixée sur un moyeu (non représenté sur la figure 5) par sa portion de pied 111. L'aube mobile 100 est une aube d'une pluralité d'aubes fixées sur un moyeu et constituant ensemble une roue mobile ou rotor de turbine, une étanchéité étant réalisée entre toutes les aubes mobiles circonférentiellement adjacentes de la roue mobile.

L'aube mobile 100 comprend en outre au niveau de la plateforme interne 130 deux bords de liaison inter-plateformes 131 et 132 présents respectivement aux extrémités circonférentielles 130a et 130b de la plateforme interne 130.

Conformément à l'invention, les bords de liaison inter-plateformes 131 et 132 sont réalisés en matériau composite comprenant un renfort fibreux constitué de fibres courtes orientées de manière aléatoire, le renfort étant densifié par une matrice céramique. Les bords de liaison 131 et 132 comportent respectivement une rainure 1310 et une rainure 1320, la rainure 1310 recevant une partie d'une première languette d'étanchéité 140 tandis que la rainure 1320 reçoit une partie d'une deuxième languette d'étanchéité 141, ce qui permet de réaliser une étanchéité dans une veine de circulation des gaz de turbomachine délimitée par la réunion des plateformes internes des aubes mobiles.

Comme décrit précédemment, la pièce de turbomachine selon l'invention comprend un corps structural qui peut être en matériau métallique ou en matériau composite à matrice céramique.

Lorsque que le corps structural est réalisé en matériau composite à matrice céramique, les pièces en matériau CMC sont formées par un renfort fibreux en fibres réfractaires (carbone ou céramique) qui est densifié par une matrice céramique, notamment carbure, nitrure, oxyde réfractaire,.... Des exemples typiques de matériaux CMC sont les matériaux C-SiC (renfort en fibres de carbone et matrice en carbure de silicium), les matériaux SiC-SiC et les matériaux C-C/SiC (matrice mixte carbone/carbure de silicium). La fabrication de pièces en composite CMC est bien connue. Le renfort fibreux est de préférence réalisé directement en une seule pièce par tissage tridimensionnel (3D). Par « tissage tridimensionnel » ou « tissage 3D » ou encore « tissage multicouche », on entend ici un mode de tissage par lequel certains au moins des fils de trame lient des fils de chaîne sur plusieurs couches de fils de chaîne ou inversement suivant un tissage correspondant à une armure de tissage qui peut être notamment choisie parmi une des armures suivantes : interlock, multi-toile, multi-satin et multi-sergé. Les renforts 3D permettent d'obtenir des géométries complexes avec des capacités de résistance au délaminage très élevées.

Les languettes d'étanchéité peuvent être réalisées en alliage à base de nickel et/ou cobalt

Un exemple de fabrication des bords de liaison en matériau composite à matrice céramique et à renfort de fibres courtes débute par la fourniture de fibres courtes qui peuvent être obtenues par broyage mécanique, par broyage énergétique, ou par découpe de fibres longues, puis tamisage des fibres répondant à la spécification de longueur qui est comprise entre 10 µm et 1000 µm. On procède ensuite au dépôt d'une interphase correspondant à la formation d'une couche d'interphase autour des fibres courtes afin de dé-fragiliser le matériau final. Le dépôt d'interphase peut être réalisé par dépôt chimique en phase vapeur (CVD) en lit fluidisé. On mélange ensuite les fibres courtes revêtues de l'interphase avec une poudre de particules céramiques, par exemple des particules de carbure de silicium, et un liant organique comprenant au moins un polymère, par exemple un polymère thermoplastique choisi par exemple parmi : alcool polyvinylique (PVA), polyéthylène glycol (PEG), polypropylène (PP), polyoxyméthylène (POM), polytéréphtalate d'éthylène (PET) ou un polymère thermodurcissable choisi par exemple parmi les suivants : résines époxydes, résines phénoliques, résines pré-céramiques.

Le mélange est injecté dans un moule ayant la forme de la pièce finale ou une forme intermédiaire vers la forme finale de la pièce finale. Le liant organique est alors polymérisé. On procède ensuite au démoulage de l'ensemble solidifié qui correspond à un corps cru (« green body »). L'étape suivante consiste à infiltrer le corps cru avec une composition à base de silicium fondu (siliciuration) de manière à former une matrice céramique, processus de densification connu sous la désignation processus MI ("Melt Infiltration") correspondant à la colonisation de la porosité résiduelle du matériau délianté par remontée capillaire d'un métal fondu, par exemple du silicium.

Des exemples de fabrication d'une pièce en matériau composite à fibres courtes et à matrice céramique sont notamment divulgués dans les documents WO 2019/122760 et WO 2019/122758.

Si nécessaire, un usinage peut être réalisé par usinage de la pièce densifiée pour l'amener à la géométrie finale.

On obtient ainsi un bord de liaison comprenant des fibres courtes ayant une longueur comprise entre 10 µm et 1000 µm et recouvertes d'une interphase, les fibres étant orientées et distribuées de manière aléatoires au sein d'une matrice de silicium et de carbure de silicium. La fabrication des bords de liaison ne comprend donc aucune opération de tissage.

Lorsque le corps structural est réalisé en matériau composite comprenant un renfort fibreux tissé 3D ou multicouche densifié par une matrice céramique, le ou les bords de liaison sont fabriqués séparément puis rapportés sur le corps structural.

Dans le premier cas, une préforme du corps structural au stade consolidé, à savoir le renfort fibreux tissé 3D ou muliticouche mis en forme et consolidé par dépôt d'une interphase comme déjà décrit ci-avant, est placée dans un moule ou outillage de maintien avec un ou plusieurs corps crus de bord de liaison en contact avec la ou les extrémités circonférentielles de la préforme du corps structural. L'ensemble est alors soumis à une cosiliciuration permettant la fixation du ou des bords de liaison sur le corps structural et l'obtention de la pièce de turbine finale.

Le corps structural et le ou les bords de liaison étant fabriqués séparément, le ou les bords de liaison sont fixés au corps structural par exemple par brasage, liaison mécanique (boulonnage, bridage, emboitement, etc.).

Lorsque le corps structural est réalisé en matériau métallique, le ou les bords de liaison sont réalisés séparément puis fixés au corps structural par brasage, liaison mécanique (boulonnage, bridage, emboitement, etc.).

## Revendications

1. Pièce de turbomachine (10) d'un ensemble annulaire s'étendant autour d'un axe (X), la pièce comprenant un corps structural (11) et au moins un bord de liaison (12) solidaire du corps structural, chaque bord de liaison comportant au moins une rainure (120, 121) destinée à recevoir une languette d'étanchéité (30, 31), caractérisée en que chaque bord de liaison (12) est en matériau composite comprenant un renfort fibreux constitué de fibres courtes orientées de manière aléatoire, ledit renfort étant densifié par une matrice céramique, en ce que le corps structural (11) et ledit au moins un bord de liaison (12) sont en des matériaux différents et en ce que ledit au moins un bord de liaison est fixé sur le corps structural.

2. Pièce selon la revendication 1, dans laquelle le corps structural (41) est en matériau composite comprenant un renfort fibreux constitué d'une pluralité de couches de fils liées entre elles par tissage tridimensionnel ou multicouche, ledit renfort étant densifié par une matrice céramique.

3. Pièce selon la revendication 1, dans laquelle le corps structural (61) est en matériau métallique.

4. Pièce selon l'une quelconque des revendications 1 à 3, dans laquelle la pièce est un secteur d'anneau de turbine (40) s'étendant de manière annulaire autour d'un axe (X), le secteur comprenant un corps structural de secteur (41) comportant une base annulaire (44) ayant une face interne destinée à définir la face interne d'un anneau de turbine lorsque le secteur d'anneau est monté à une structure de support d'anneau et une face externe à partir de laquelle s'étend une ou plusieurs portions d'accrochage (45, 46) du secteur d'anneau à la structure de support d'anneau, le secteur d'anneau (40) comprenant en outre deux bords de liaison inter-secteurs (42, 43) présents aux extrémités circonférentielles (41a, 41b) du corps structural de secteur (41), chaque bord de liaison inter-secteurs étant destiné à être en regard d'un secteur d'anneau circonférentiellement voisin lorsque le secteur d'anneau est monté sur la structure de support d'anneau, chaque bord de liaison inter-secteurs comportant une ou plusieurs rainures (420, 421, 422, 430, 431, 432) chacune destinée à recevoir une languette d'étanchéité.

5. Pièce selon l'une quelconque des revendications 1 à 3, dans laquelle la pièce est un secteur de distributeur (80) s'étendant de manière annulaire autour d'un axe (X), le secteur comprenant un corps structural de secteur (81) comportant un profil aérodynamique (82) s'étendant suivant une direction radiale (DR) entre une plateforme interne (83) et une plateforme externe (84) et, suivant une direction axiale (DA), entre un bord d'attaque (82a) et un bord de fuite (82b), ledit secteur comprenant en outre deux bords de liaison inter-plateformes (830, 831 ; 840, 841) présents aux extrémités circonférentielles (83a, 83b ; 84a, 84b) de chaque plateforme (83 ; 84), chaque bord de liaison inter-plateforme étant destiné à être en regard d'une plateforme d'un secteur circonférentiellement voisin, chaque bord de liaison inter-plateformes comportant une ou plusieurs rainures (8300 ; 8310 ; 8400, 8401 ; 8410, 8411) chacune destinée à recevoir une languette d'étanchéité.

6. Pièce selon l'une quelconque des revendications 1 à 3, dans laquelle la pièce est une aube mobile de turbine (100) s'étendant de manière annulaire autour d'un axe (X), l'aube comprenant un corps structural d'aube (101) s'étendant suivant une direction radiale (DR) entre une portion de pied ou portion interne (111) et un sommet d'aube ou une portion externe (112) et, suivant une direction axiale (DA), entre un bord d'attaque et un bord de fuite (110a, 110b), ledit corps comprenant en outre au moins une plateforme (130), l'aube de turbine comprenant en outre deux bords de liaison inter-plateformes (131, 132) présents aux extrémités circonférentielles (130a, 130b) de chaque plateforme, chaque bord de liaison inter-plateforme étant destiné à être en regard d'une plateforme d'une aube circonférentiellement voisine, chaque bord de liaison inter-plateformes comportant une ou plusieurs rainures chacune destinée à recevoir une languette d'étanchéité.

7. Procédé de fabrication d'une pièce de turbomachine (10) d'un ensemble annulaire s'étendant autour d'un axe (X), le procédé comprenant :
- la réalisation d'un corps structural (11), et étant **caractérise par**
- la réalisation d'au moins un bord de liaison (12) solidaire du corps structural en matériau composite comprenant un renfort fibreux constitué de fibres courtes orientées de manière aléatoire, ledit renfort étant densifié par une matrice céramique, chaque bord de liaison comportant au moins une rainure (120, 121) destinée à recevoir une languette d'étanchéité (30, 31),
- la fixation de chaque bord de liaison (12) au corps structural (11), le corps structural (11) et ledit au moins un bord de liaison (12) étant en des matériaux différents.

8. Procédé selon la revendication 7, dans lequel la réalisation du corps structural (41) comprend le tissage tridimensionnel ou multicouche d'un renfort fibreux et la densification du renfort fibreux par une matrice céramique.

9. Procédé selon la revendication 8, dans lequel la fixation de chaque bord de liaison (42, 43) au corps structural (41) est réalisée par brasage, par liaison mécanique ou par cosiliciuration.

10. Procédé selon la revendication 7, dans lequel le corps structural (61) est réalisé en matériau métallique.

11. Procédé selon la revendication 7, dans lequel la fixation de chaque bord de liaison (62, 63) au corps structural (61) est réalisée par brasage ou par liaison mécanique.

## Patentansprüche

1. Teil (10) einer Turbomaschine einer ringförmigen Anordnung, die sich um eine Achse (X) erstreckt, wobei das Teil einen Strukturkörper (11) und zumindest einen Verbindungsrand (12), der mit dem Strukturkörper fest verbunden ist, umfasst, wobei jeder Verbindungsrand zumindest eine Nut (120, 121) beinhaltet, die dazu bestimmt ist, eine Dichtungslasche (30, 31) aufzunehmen, **dadurch gekennzeichnet, dass** jeder Verbindungsrand (12) aus einem Verbundmaterial besteht, das eine Faserverstärkung umfasst, die aus kurzen, auf zufällige Weise orientierten Fasern gebildet ist, wobei die Verstärkung durch eine keramische Matrix verdichtet ist, dass der Strukturkörper (11) und der zumindest eine Verbindungsrand (12) aus unterschiedlichen Materialien bestehen, und dass der zumindest eine Verbindungsrand auf dem Strukturkörper fixiert ist.

2. Teil nach Anspruch 1, wobei der Strukturkörper (41) aus Verbundmaterial besteht, das eine Faserverstärkung umfasst, die aus einer Vielzahl von Schichten von untereinander durch dreidimensionale oder mehrlagige Verwebung verbundenen Fäden gebildet ist, wobei die Verstärkung durch eine keramische Matrix verdichtet ist.

3. Teil nach Anspruch 1, wobei der Strukturkörper (61) aus Metallmaterial besteht.

4. Teil nach einem der Ansprüche 1 bis 3, wobei das Teil ein Turbinenring-Sektor (40) ist, der sich auf ringförmige Weise um eine Achse (X) erstreckt, wobei der Sektor einen Sektor-Strukturkörper (41) umfasst, der eine ringförmige Basis (44) beinhaltet, die eine Innenseite aufweist, die dazu bestimmt ist, die Innenseite eines Turbinenrings zu definieren, wenn der Ringsektor auf einer Ringträgerstruktur montiert ist, und eine Außenseite, von welcher aus sich ein oder mehrere Abschnitte (45, 46) zur Verhakung des Ringsektors an der Ringträgerstruktur erstrecken, wobei der Ringsektor (40) ferner zwei Zwischensektor-Verbindungsränder (42, 43) umfasst, die an den umlaufenden Enden (41a, 41b) des Sektor-Strukturkörpers (41) vorliegen, wobei jeder Zwischensektor-Verbindungsrand dazu bestimmt ist, einem in Umfangsrichtung benachbarten Ringsektor zugewandt zu sein, wenn der Ringsektor auf der Ringträgerstruktur montiert ist, wobei jeder Zwischensektor-Verbindungsrand eine oder mehrere Nuten (420, 421, 422, 430, 431, 432) beinhaltet, die jeweils dazu bestimmt sind, eine Dichtungslasche aufzunehmen.

5. Teil nach einem der Ansprüche 1 bis 3, wobei das Teil ein Verteiler-Sektor (80) ist, der sich auf ringförmige Weise um eine Achse (X) erstreckt, wobei der Sektor einen Sektor-Strukturkörper (81) umfasst, der ein aerodynamisches Profil (82) beinhaltet, das sich einer radialen Richtung (DR) folgend zwischen einer inneren Plattform (83) und einer äußeren Plattform (84) und, einer axialen Richtung (DA) folgend, zwischen einer Vorderkante (82a) und einer Hinterkante (82b) erstreckt, wobei der Sektor ferner zwei Zwischenplattform-Verbindungsränder (830, 831; 840, 841) umfasst, die an den umlaufenden Enden (83a, 83b; 84a, 84b) einer jeden Plattform (83; 84) vorliegen, wobei jeder Zwischenplattform-Verbindungsrand dazu bestimmt ist, einer Plattform eines in Umfangsrichtung benachbarten Sektors zugewandt zu sein, wobei jeder Zwischenplattform-Verbindungsrand eine oder mehrere Nuten (8300; 8310; 8400, 8401; 8410, 8411) beinhaltet, die jeweils dazu bestimmt sind, eine Dichtungslasche aufzunehmen.

6. Teil nach einem der Ansprüche 1 bis 3, wobei das Teil eine bewegliche Turbinenschaufel (100) ist, die sich auf ringförmige Weise um eine Achse (X) erstreckt, wobei die Schaufel einen Schaufel-Strukturkörper (101) umfasst, der sich einer radialen Richtung (DR) folgend zwischen einem Fußabschnitt oder inneren Abschnitt (111) und einem Spitzenabschnitt oder äußeren Abschnitt (112) und, einer axialen Richtung (DA) folgend, zwischen einer Vorderkante und einer Hinterkante (110a, 110b) erstreckt, wobei der Körper ferner zumindest eine Plattform (130) umfasst, wobei die Turbinenschaufel ferner zwei Zwischenplattform-Verbindungsränder (131, 132) umfasst, die an den umlaufenden Enden (130a, 130b) einer jeden Plattform vorliegen, wobei jeder Zwischenplattform-Verbindungsrand dazu bestimmt ist, einer Plattform einer in Umfangsrichtung benachbarten Schaufel zugewandt zu sein, wobei jeder Zwischenplattform-Verbindungsrand eine oder mehrere Nuten beinhaltet, die jeweils dazu bestimmt sind, eine Dichtungslasche aufzunehmen.

7. Verfahren zur Herstellung eines Teils (10) einer Turbomaschine einer ringförmigen Anordnung, die sich um eine Achse (X) erstreckt, wobei das Verfahren umfasst:
- die Verwirklichung eines Strukturkörpers (11), und **gekennzeichnet durch**
- die Verwirklichung zumindest eines Verbindungsrands (12), der mit dem Strukturkörper fest verbunden ist, aus einem Verbundmaterial, das eine Faserverstärkung umfasst, die aus kurzen, auf zufällige Weise orientierten Fasern gebildet wird, wobei die Verstärkung **durch** eine keramische Matrix verdichtet wird, wobei jeder Verbindungsrand zumindest eine Nut (120, 121) beinhaltet, die dazu bestimmt ist, eine Dichtungslasche (30, 31) aufzunehmen,
- die Fixierung eines jeden Verbindungsrandes (12) auf dem Strukturkörper (11), wobei der Strukturkörper (11) und der zumindest eine Verbindungsrand (12) aus unterschiedlichen Materialien bestehen.

8. Verfahren nach Anspruch 7, wobei die Verwirklichung des Strukturkörpers (41) die dreidimensionale oder mehrlagige Verwebung einer Faserverstärkung und die Verdichtung der Faserverstärkung durch eine keramische Matrix umfasst.

9. Verfahren nach Anspruch 8, wobei die Fixierung eines jeden Verbindungsrandes (42, 43) auf dem Strukturkörper (41) durch Verlöten, durch mechanische Verbindung oder durch Ko-Silicidierung verwirklicht wird.

10. Verfahren nach Anspruch 7, wobei der Strukturkörper (61) aus einem Metallmaterial verwirklicht wird.

11. Verfahren nach Anspruch 7, wobei die Fixierung eines jeden Verbindungsrandes (62, 63) auf dem Strukturkörper (61) durch Verlöten oder durch mechanische Verbindung verwirklicht wird.

## Claims

1. A turbomachine part (10) of an annular assembly extending around an axis (X), the part comprising a structural body (11) and at least one connecting edge (12) integral with the structural body, each connecting edge having at least one groove (120, 121) intended to receive a sealing tab (30, 31), **characterised in that** each connecting edge (12) is made of composite material comprising a fibrous reinforcement consisting of randomly-oriented short fibres, said reinforcement being densified by a ceramic matrix, **in that** the structural body (11) and said at least one connecting edge are of different materials and **in that** said at least one connecting edge is secured on the structural body.

2. The part according to claim 1, wherein the structural body (41) is made of composite material comprising a fibrous reinforcement consisting of a plurality of layers of yarns linked together by three-dimensional or multilayer weaving, said reinforcement being densified by a ceramic matrix.

3. The part according to claim 1, wherein the structural body (61) is made of metal material.

4. The part according to any one of claims 1 to 3, wherein the part is a turbine ring sector (40) extending in an annual manner around an axis (X), the sector comprising a sector structural body (41) having an annular base (44) having an inner face intended to define the inner face of a turbine ring when the ring sector is mounted on a ring support structure, and an outer face from which one or more attachment portions (45, 46) of the ring sector extend to the ring support structure, the ring sector (40) further comprising two inter-sector connecting edges (42, 43) at the circumferential ends (41a, 41b) of the sector structural body (41), each inter-sector connecting edge being intended to be opposite a circumferentially neighbouring ring sector when the ring sector is mounted on the ring support structure, each inter-sector connecting edge having one or more grooves (420, 421, 422, 430, 431, 432) each intended to receive a sealing tab.

5. The part according to any one of claims 1 to 3, wherein the part is a nozzle sector (80) extending in an annual manner around an axis (X), the sector comprising a sector structural body (81) having an aerodynamic profile (82) extending in a radial direction (DR) between an inner platform (83) and an outer platform (84) and, in an axial direction (DA), between a leading edge (82a) and a trailing edge (82b), said sector further comprising two inter-platform connecting edges (830, 831; 840, 841) present at the circumferential ends (83a, 83b; 84a, 84b) of each platform (83; 84), each inter-platform connecting edge being intended to be opposite a platform of a circumferentially neighbouring sector, each inter-platform connecting edge having one or more grooves (8300; 8310; 8400, 8401; 8410, 8411) each intended to receive a sealing tab.

6. The part according to any one of claims 1 to 3, wherein the part is a turbine blade (100) extending in annual manner around an axis (X), the blade comprising a blade structural body (101) extending in a radial direction (DR) between a root portion or inner portion (111) and a blade tip or outer portion (112) and, in an axial direction (DA), between a leading-edge and a trailing edge (110a, 110b), said body further comprising at least one platform (130), the turbine blade further comprising two inter-platform connecting edges (131, 132) at the circumferential ends (130a, 130b) of each platform, each inter-platform connecting edge being intended to be opposite a platform of a circumferentially neighbouring blade, each inter-platform connecting edge each having one or more grooves intended to receive a sealing tab.

7. A method for manufacturing a turbomachine part (10) of an annular assembly extending around an axis (X), the method comprising:
- producing a structural body (11), and being **characterized by**
- producing at least one connecting edge (12) integral with the structural body made of composite material comprising a fibrous reinforcement consisting of randomly oriented short fibres, said reinforcement being densified by a ceramic matrix, each connecting edge having at least one groove (120, 121) intended to receive a sealing tab (30, 31),
- fixing each connecting edge (12) to the structural body (11) and the structural body and said at least one connecting edge being of different materials.

8. The method according to claim 7, wherein the production of the structural body (41) comprises three-dimensional or multilayer weaving of a fibrous reinforcement and densifying of the fibrous reinforcement by a ceramic matrix.

9. The method according to claim 8, wherein the fixing of each connecting edge (42, 43) to the structural body (41) is carried out by brazing, by mechanical connection or by co-silicidation.

10. The method according to claim 7, wherein the structural body (61) is produced from metal material.

11. The method according to claim 7, wherein the fixing of each connecting edge (62, 63) to the structural body (61) is carried out by brazing or by mechanical connection.
